# EUROPÄISCHE PATENTSCHRIFT

(11) **EP 3 237 273 B1**
(45) Veröffentlichungstag und Bekanntmachung des Hinweises auf die Patenterteilung: **24.10.2018**
(21) Anmeldenummer: 15826130.5
(22) Anmeldetag: 19.11.2015
(51) Int. Cl.: B62J 7/08, B62J 9/00

(54) **FIXIER- UND/ODER ARRETIERUNGSSYSTEM**
FASTENING AND/OR LOCKING SYSTEM
SYSTÈME DE FIXATION ET/OU DE BLOCAGE

(30) Priorität: 22.11.2014 DE 202014009305 U
(43) Veröffentlichungstag der Anmeldung: 01.11.2017
(73) Patentinhaber: Ortlieb Sportartikel GmbH, 91560 Heilsbronn (DE)
(72) Erfinder: BOAS, Günther, 91560 Heilsbronn (DE)
(74) Vertreter: Schuhmann, Albrecht
(86) Internationale Anmeldenummer: PCT/DE2015/000550
(87) Internationale Veröffentlichungsnummer: WO 2016/078635

(56) Entgegenhaltungen:
- DE-A1- 4 424 943
- DE-A1-102011 118 867
- DE-A1-102012 012 231
- DE-U1-202010 004 309
- DE-U1-202013 011 432
- US-A1- 2002 005 421
- US-A1- 2003 122 002

## Beschreibung

Die vorliegende Erfindung betrifft ein Fixier- und/oder Arretierungssystem zur Befestigung von Behältnissen an einer Befestigungsvorrichtung, insbesondere an einem Träger wie einem Gepäckträger bei welchem wenigstens ein Befestigungselement an dem Träger oder an einem Zubehörteil für den Träger angebracht ist und in wenigstens ein Aufnahmeelement, welches an einem Behältnisses angebracht und/oder mit diesem verbunden ist eingreift und mit diesem lösbar arretiert wird.

Zum Mitführen von Behältnissen wie Taschen, Koffer, Rucksäcke oder dergleichen an einem Zweirad oder allgemein an einem Träger sind verschiedene Systeme bekannt um Taschen oder andere Behältnisse mit dem Träger, insbesondere Gepäckträger zu verbinden, bzw. an diesem anzubringen. Besonderer Beliebtheit erfreuen sich dabei Systeme bei welchen die Taschen lösbar und einfach an einem Gepäckträger befestigt, justiert und wieder abgenommen werden können.

Eine derartige Ausführung ist z.B. in der DE 4041460A1 offenbart, welche eine Tasche mit einer auf ihrer Rückseite angeordnete Schiene zeigt, welche mit Haken ausgerüstet ist mittels welchen sich die Tasche in die obere Strebe eines Gepäckträgers einhängen lässt. Derartige Schienen sind in Neuerungen als Rast- oder Schwenkhaken ausgebildet und arretieren die Befestigung. Auch diese Varianten benötigen sehr große, stabile Haken oder Haken mit großen Auslenkungen.

Auch in der DE 202006017966U1 ist eine Variante für eine solche Befestigung von Behältnissen an einen Gepäckträger gezeigt bei welcher zwei Haken an die Rückseite der Tasche fest befestigt sind und mittels welchen die Tasche an einem Gepäckträger befestigt werden kann.

In der DE 20 2010 004309 U1, auf die der Oberbegriff von Anspruch 1 basiert, wird eine Befestigungsvorrichtung von Taschen an einer Befestigungsvorrichtung wie einem Gepäckträger offenbart in welchem ein Befestigungselement jedoch nur entlang einer in einer oberen Erhebung einer Abdeckplatte angeordneten Führung verschoben werden kann. Der Nutzer muss daher zunächst eine Satteltasche selber halten bevor eine Verbindung mit dem Träger geschaffen werden kann, was ebenfalls wieder ein genaues Positionieren der Tasche und einen größeren Kraftaufwand für den Nutzer bedeutet.

Die Offenbarungen DE 10 2012 012231 A1, DE 10 2011 118867 A1, US 2002/005421 A1, DE 44 24 943 A1, US 2003/1220022 A1 und die DE 20 2013 011432 U1 zeigen bekannte Befestigungssysteme und diese haben mehr oder weniger kreisförmige Öffnungen, in die ein Befestigungselement eingeführt und dann per Schnappverschluss festgehalten wird.

Als Haltevorrichtung zum Anbringen von Behältnissen sind auch speziell dafür vorbereitete Träger, insbesondere Gepäckträger bekannt, welche über fest angeordnete Befestigungsstellen für Behältnisse, wie z.B. Taschen verfügen. Beispielhaft ist hier die WO 2006/086948A1 zu nennen, in welcher ein Gepäckträger gezeigt ist, welcher mit Befestigungselementen zum Anbringen von einem Behältnis ausgerüstet ist.

Die an dem Gepäckträger zur Verfügung gestellten Aufnahmepunkte für entsprechende Gegenstücke an Taschen werden bei Neuerungen auch als nachträglich montierbare Elemente zur Montage an einem Gepäckträger ausgebildet, womit nicht der gesamte Gepäckträger als Zubehörteil benötigt wird.

Bei den bekannten Systemen erfolgt die Befestigung der Tasche oder eines anderen Behältnisses an einem Gepäckträger mittels wenigstens eines an der Tasche angebrachten Aufnahmepunktes, welcher mit wenigstens einem Befestigungspunkt an einem Träger bzw. Gepäckträger in Eingriff gebracht wird. Die verwendeten Ausführungen von Aufnahmepunkten oder Elementen an Taschen sind dabei als an der Rückseite der Tasche an- oder aufgebrachte Haken, welche mit Elementen am Gepäckträger in Eingriff bringbar sind. Auch bekannt sind Schienen, welche auf der Rückseite der Tasche angebracht sind und über wenigstens einen Hakenmechanismus verfügen mit welchem dieser an wenigstens einem Befestigungselement am Gepäckträger angebracht wird.

Als nachteilhaft oder unbequem in der Handhabung wird bei vielen Befestigungsverfahren zum Anbringen und Befestigen von Behältnissen an einem Träger die Notwendigkeit gesehen, die Tasche beim Einhängen präzise über mehrere Stellen halten zu müssen um diese dann beim Absenken der Tasche oder des Behältnisses gleichzeitig die Aufnahmestellen an der Tasche oder des Behältnisses mit den Befestigungsstellen am Träger in Eingriff zu bringen in welchen diese einrasten. Dies ist für viele Anwender schwierig, insbesondere wenn die Tasche oder das Behältnis gefüllt ist und dadurch ein höheres Gewicht besitzt und das Halten der hohen Last in einer exakten Position sehr unbequem ist.

Ein weiterer Kritikpunkt an bekannten Befestigungsverfahren zum Anbringen und Befestigen von Behältnissen an einem Träger wird die Handhabung beim Abnehmen der Tasche oder des Behältnisses von einem Träger gesehen, da hierbei zusätzlich zum Anheben der Tasche noch gleichzeitig ein Entriegelungselement betätigt werden muss, was sehr oft eine Bedienung mit beiden Händen erforderlich macht.

Aufgabe der vorliegenden Erfindung ist es eine Haltevorrichtung zum Anbringen von Behältnissen an einem Träger, insbesondere zum Anbringen von Packtaschen oder ähnlichen Behältnissen an einem Zweirad bzw. an einem Gepäckträger zu schaffen, welche die genannten Nachteile nicht aufweist. Insbesondere soll die Ausführung von auf der Rückseite glatten bzw. flachen Taschen möglich sein und die Handhabung, insbesondere beim Einhängen und Abnehmen der Tasche oder des Behältnisses von einem Gepäckträger erleichtert sein.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Fixier- und/oder Arretierungssystem zur Befestigung von Behältnissen an einer Befestigungsvorrichtung, insbesondere an einem Träger wie einem Gepäckträger bei welchem wenigstens ein Befestigungselement an dem Träger oder an einem Zubehörteil für den Träger angebracht ist und in wenigstens ein Aufnahmeelement, welches an einem Behältnisses angebracht und/oder mit diesem verbunden ist eingreift und mit diesem lösbar arretiert wird, wobei das Aufnahmeelement eine Grundplatte, mit zwischen dieser und einer Abdeckplatte laufendem, federbelastetem Schieber aufweist, wobei die Abdeckplatte Erhebungen und/oder Hinterschneidungen aufweist, welche über einen Durchbruch von einer Seite der Abdeckplatte zu anderen verfügt, wobei hinter der einen Erhebung der Bereich für den federbelasteten Schieber ausgeführt ist und der Raum hinter der anderen Erhebung mit seiner Hinterschneidung für das Eingreifen des Überstandes oder Bunds eines Befestigungselementes ausgeführt ist, wobei der federbelastete Schieber ein in den Durchbruch einschiebbares Befestigungselement in einen Einschnitt in der Erhebung der Abdeckplatte eindrückt und fixiert.

Ein Pilz- förmiges, an einem Trägers ausgebildetes oder am Träger fest angebrachtes oder reversibel befestigtes Befestigungselement kann mit dem wenigstens einem Aufnahmeelement der Tasche oder des Behältnisses durch einschieben des Aufnahmeelements in das Befestigungselement in Verbindung gebracht werden. Das Befestigungselement wird in den Durchbruch, welcher über wenigstens einen Einschnitt verfügt, eingeführt, wobei die Erhebungen an dieser Stelle nach hinten offen sind und/oder eine Hinterschneidung aufweisen. Das Pilz- förmige Befestigungselement greift somit mit seinem vergrößerten Querschnitt hinter diese Erhebungen und schafft eine Verbindung zwischen dem Aufnahmeelement an der Tasche oder des Behältnisses und dem Befestigungselement am Träger.

In der Abdeckplatte der Aufnahmevorrichtung ist in einem Bereich ein Einschnitt ausgebildet in welchen der federbelastete Schieber das Pilz- förmige Befestigungselement beim Hineinschieben hineinführt und bedingt durch das Gewicht der Tasche dort hineingleitet und fixiert ist. Der Weg des Einschnittes ist dabei bevorzugt kurvenförmig, der Bewegung der Tasche bei einem seitlichen Einschwenken angepasste Bewegung, ausgebildet.

Zusätzlich zum Gewicht der Tasche mit welchem das untere Aufnahmeelement der Tasche an dem bevorzugt Pilz- förmigen Haltepunkt und die oberen Aufnahmeelemente in den oberen Befestigungselementen in ihren Einschnitten gehalten werden, verhindert der federbelastete Schieber in den oberen Aufnahmeelementen ein Herausgleiten, Springen oder Lösen des Befestigungsmittel am Träger aus der Aufnahmevorrichtung. Der federbelastete Schieber ist dazu bevorzugt an seiner, der oberen Abdeckplatte des Aufnahmeelements zugewandten Oberkante flach ausgeführt womit die Oberkante des Schiebers den vergrößerten Umfang eines Pilz- förmigen Befestigungsmittel noch hintergreift und fixiert.

Der zwischen der Grundplatte und der Abdeckplatte in Führungsmitteln laufende federbelastete Schieber ist mit Federn ausgerüstet, welche den Schieber gegen Angriffpunkte an und/oder auf der Grund und/oder Abdeckplatte drücken durch welche die Verriegelung des Befestigungsmittels z.B. an einem Gepäckträger mit dem Aufnahmeelement erfolgt.

Die Grundplatte des Aufnahmeelements wird bevorzugt fest mit einem Taschenkörper oder einem Behälter verbunden wie beispielsweise durch verschweißen und/oder verkleben oder sicher reversibel an diesem angebracht. Die Abdeckplatte mit den beschriebenen Funktionselementen wird austauschbar oder fest an die Grundplatte angebracht und/oder mit dieser verbunden, hierbei können Verschraubungen, Nieten, Klippsen, Stecken oder auch Kleben und Verschweißen der beiden Teile angewandt werden.

In der bevorzugten Ausführung eines Befestigungssystems mit den erfindungsgemäßen Aufnahmeelementen ist eine Tasche mit einem unteren Führungselement und zwei oberen Fixier- und/oder Arretierungselementen bzw. Aufnahmeelementen ausgerüstet, wobei das untere dabei als Führungselement ausgeführt ist, beispielsweise mit einem Schlitz, bevorzugt mit einer Hinterschneidung für die Aufnahme eines Pilz- förmigen Befestigungselementes.

Eine so ausgerüstete Tasche und/oder ein Behälter lässt sich mit seinem unteren als Führung ausgerüstetem Aufnahmeelement zunächst in ein Befestigungsmittel an z.B. einem Gepäckträger einschieben womit der Anwender schon von dem Gewicht der Tasche entlastet wird. In dieser Position lässt sich die Tasche leicht gegen den Gepäckträger drücken und durch seitliches Schwenken der Tasche werden die oberen Fixier- und/oder Arretierungselemente ebenfalls mit den Befestigungsmitteln am Gepäckträger in Einklang gebracht. Dabei gleiten die Befestigungsmittel in dem Durchbruch der Abdeckplatte entlang der kurvenförmig gestalteten Oberkante bis zu dem Einschnitt in der oberen Erhebung der Abdeckplatte und wird dort gegen das Gewicht der Tasche gehalten. Durch den vergrößerten Durchmesser des bevorzugt Pilz- förmig ausgestalteten Befestigungsmittels greift dieser hinter die Erhebungen der Abdeckplatte und sichert die Tasche gegen Herausfallen. Durch den federbelasteten Schieber wird ein Herausspringen, Fallen oder Lösen der Tasche aus dieser Position verhindert.

Erst das Anheben der Tasche drückt den federbelasteten Schieber zur Seite und/oder nach unten und lässt den vergrößerten Durchmesser des Befestigungsmittels hinter der Hinterschneidung des oberen Bereichs der Abdeckplatte hervortreten damit dieser frei ist. Danach kann die Tasche einfach abgenommen werden wofür nur ein leichtes nach vorne Kippen erforderlich ist.

Im Folgenden wird die Erfindung anhand von Zeichnungen beispielhaft näher beschrieben, dabei zeigen:
- Fig.1: eine symbolisch dargestellte Rückseite einer Tasche mit einem Fixier- und/oder Arretierungssystem
- Fig. 2: eine Zusammenbauzeichnung eines Fixier- und/oder Arretierungselements

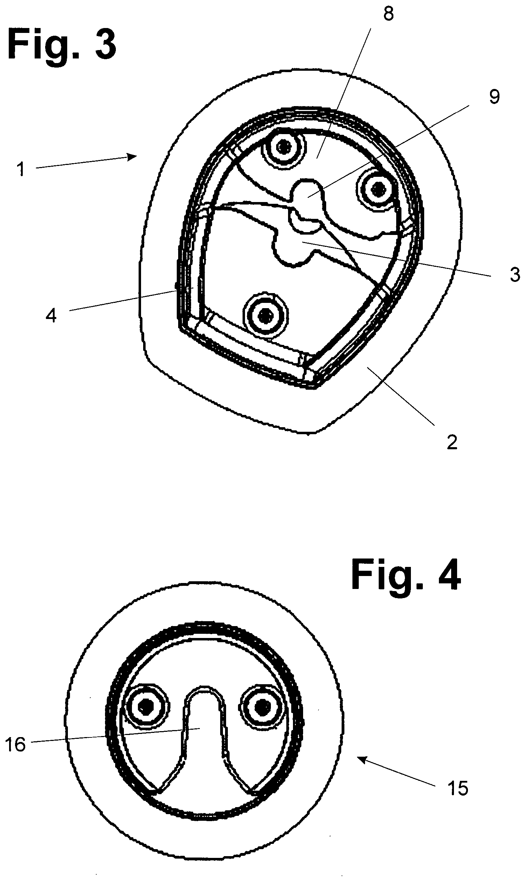

- Fig. 3: eine Frontansicht eines Fixier- und/oder Arretierungselements
- Fig. 4: eine Frontansicht eines Führungselements
- Fig. 5: eine schematische Darstellung des Bewegungsverlaufs beim Anhängen einer Tasche mit dem Fixier- und/oder Arretierungssystems

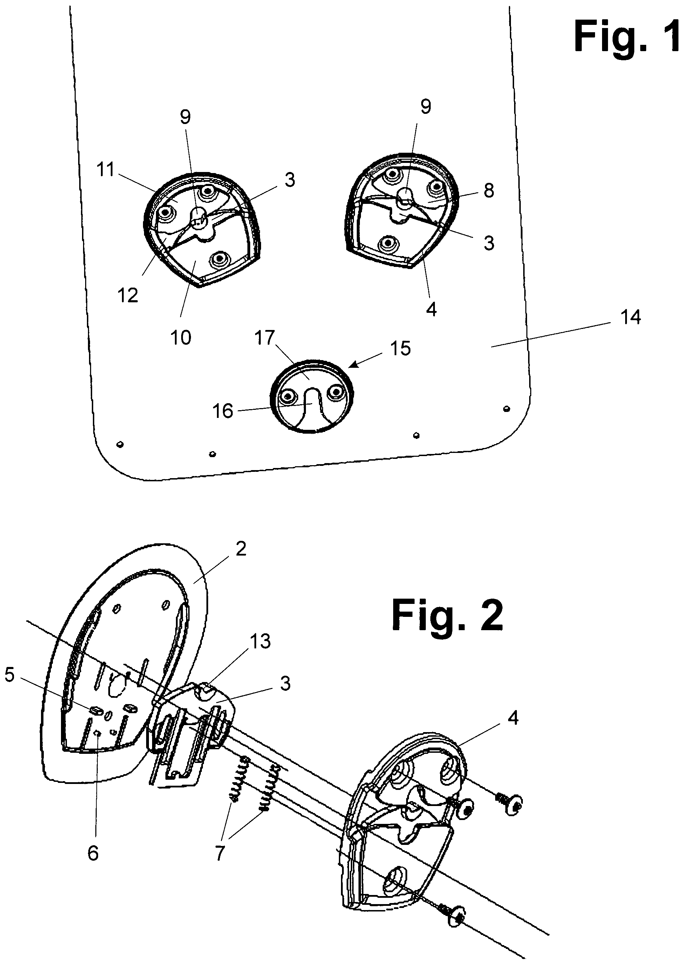

In Fig. 1 ist ein Fixier- und/oder Arretierungssystem zur lösbaren Befestigung einer Tasche 14 oder eines Behälters an einem Träger, wie z.B. einem Fahrradgepäckträger gezeigt. Die symbolisch dargestellte Tasche 14 ist in dieser Ausführung mit zwei oberen Fixier- und/oder Arretierungsmitteln bzw. Aufnahmeelementen 1 und einer unteren Führungsaufnahme 15 ausgerüstet. Bevorzugt sind die gezeigten Aufnahmeelemente und das Führungselement aus einem Grundkörper 2 und wenigstens einer Abdeckplatte 4, 17 ausgebildet. Die Grundplatte 2 bzw. der Grundkörper ist dabei bevorzugt mit der Tasche oder dem Behälter 14 fest verbunden, bevorzugt wasserdicht fest verbunden, wie beispielsweise verschweißt oder verklebt. Bevorzugt ragt der Grundkörper zur Ausbildung einer möglichst planen Rückseite der Tasche oder des Behälters leicht ins Innere der Tasche und/oder des Behälters hinein. Das Fixier- und/oder Arretierungsmittel ist mit einer Abdeckplatte 4, ausgerüstet, welche obere 11 und untere 10 ausgehölte, erhabenen Teilbereiche aufweist, hinter welchen ein federbelasteter Schieber 3 angeordnet ist. Gemäß der Darstellung von Fig. 1 und Fig. 2 ist der Schieber 3 mit einem Kopf 13 ausgerüstet, welcher in einen Durchbruch 12 der Abdeckplatte zwischen dem oberen und unteren Bereich hineinragt. Die beiden Erhebungen 10, 11 weisen Hinterschneidungen auf, in welche der größere Durchmesser eines Pilz- förmigen Befestigungselementes beim Einführen eingreift, während der mittlere Steg, mit kleinerem Durchmesser des Pilz- förmigen Befestigungsmittels in dem Durchgang 12 zwischen der Erhöhungen 10, 11 einfahrt und auf den federbelasteten Schieber trifft.

Beim weiteren Einschieben, gegen die Federkraft des Schiebers wird dieser nach unten geschoben und der mittlere Steg eines Pilz- förmigen Befestigungsmittel dabei gegen die untere Kante der oberen Erhebung 11 gedrückt. Entlang dieser Kante , bevorzugt etwa in der Mitte der Strecke, entlang dieser Kante ist ein Einschnitt 9 in dem oberen Bereich 11 der Abdeckplatte angeordnet, in welche der mittlere Steg des Pilz- förmigen Befestigungsmittels während des Einschwenkens der Tasche geführt von der ausgeübten Kraft durch den federbelasteten Schieber 3 und bedingt durch das Gewicht der Tasche und/oder des Behälters hineingeführt und verriegelt wird. Hierbei wird der vergrößerte Durchmesser eines Pilz- förmigen Befestigungsmittels hinter der Wand des oberen Bereichs 11 und zum anderen hinter der Fläche des oberen Bereichs des Schiebers gehalten und gegen nach vorne gerichtete Bewegung gesichert.

Nach einer bevorzugten Ausführung ist der Einschnitt 9 in dem oberen Bereich 11 der Abdeckplatte nicht gerade ausgeführt sondern mit einer Vorzugsrichtung ausgeführt. Für die beiden Abdeckplatten eines rechten und eines linken Fixier- und/oder Arretierungsmittels sind diese Einschnitte weiter bevorzugt in unterschiedliche Vorzugsrichtungen gelenkt. Dadurch wird auch das versehentlich Lösen der Tasche in der am Gepäckträger angebrachten Situation wirksam verhindert da immer wenigstens eines der Aufnahmeelemente mit einem Einschnitt 9 versehen ist der gerade diese Verschwenkung besonders wirksam blockiert.

Zum bewussten Abnehmen der Tasche von einem Gepäckträger wird die Tasche nach oben angehoben, dabei fährt zunächst der mittlere Steg des Pilz- förmigen Befestigungsmittels aus dem Einschnitt 9 heraus und die Tasche kann seitlich ausgeschwenkt und abgenommen werden indem auch das untere Aufnahmemittel 15 aus dem unteren Befestigungsmittel entlang des Einschnittes 16 nach oben gezogen wird.

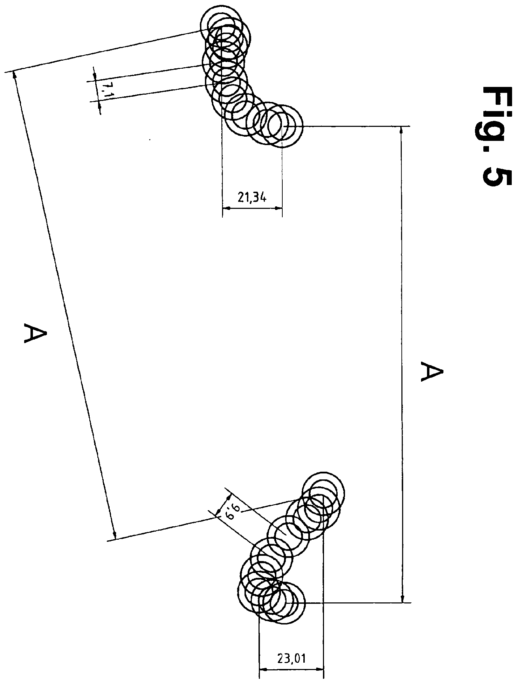

In der Fig. 5 ist beispielhaft der Bewegungsablauf der oberen Aufnahmepunkte beim Anbringen und/oder Abnehmen der Tasche und/oder des Behälters dargestellt. Währen der eigentliche Abstand A der Aufnahmepunkte zueinander in jeder Lage gleichbleibt, ist die zueinander sich einstellende Auslankung der Aufnahmepunkte währen der Anbring- und/oder Abnahmebewegung der Tasche und/oder des Behälters nicht gleich.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Fixier- und/oder Arretierungssystem von Behältnissen an einer Befestigungsvorrichtung, insbesondere an einem Träger wie einem Gepäckträger bei welchem wenigstens ein Befestigungselement an dem Träger oder an einem Zubehörteil für den Träger angebracht ist und in wenigstens ein Aufnahmeelement, welches an einem Behältnisses angebracht und/oder mit diesem verbunden ist eingreift und mit diesem lösbar arretiert wird, wobei das Aufnahmeelement (1) eine Grundplatte (2) mit zwischen dieser und einer Abdeckplatte (4) laufendem, federbelastetem Schieber (3) aufweist,
**dadurch gekennzeichnet**,
wobei die Abdeckplatte eine obere Erhebung (11) und eine untere Erhebung (12) aufweist und die obere Erhebung eine Hinterschneidung aufweist, und wobei die Abdeckplatte über einen Durchbruch (12) von einer Seite der Abdeckplatte (4) zur anderen verfügt,
wobei hinter der unteren Erhebung (10) der Bereich für den federbelasteten Schieber (3) ausgeführt ist und der Raum hinter der oberen Erhebung (11) mit seiner Hinterschneidung für das Eingreifen des Überstandes oder Bunds eines Befestigungselementes ausgeführt ist, wobei der federbelastete (3) das in den Durchbruch (12) einschiebbare Befestigungselement in einen Einschnitt (9) in der oberen Erhebung (11) der Abdeckplatte eindrückt und fixiert.

2. Fixier- und/oder Arretierungssystem nach Anspruch 1,
**dadurch gekennzeichnet,**
**dass** der Durchbruch (12) zwischen den beiden Erhebungen (10, 11) angeordnet ist und dass in diesen Durchbruch (12) Pilz- förmiges Befestigungselement einführbar ist und einer kurvenförmigen Kante des oberen Bereichs (11) in einen Einschnitt (9) folgen kann.

3. Fixier- und/oder Arretierungssystem nach Anspruch 1,
**dadurch gekennzeichnet,**
**dass** der Schieber (3) an seinem, dem Einschnitt (9) der oberen Erhebung (11) der Abdeckplatte (4) zugewandten Oberkante (13) flach ausgeführt ist.

4. Fixier- und/oder Arretierungssystem nach Anspruch 1,
**dadurch gekennzeichnet,**
**dass** die Grundplatte (2) und/oder die Abdeckplatte (4) mit Angriffelementen (5) für Federn (7) sowie Stopp- und/oder Führungselementen (6) für den Schieber (3) ausgeführt ist.

5. Fixier- und/oder Arretierungssystem nach Anspruch 1,
**dadurch gekennzeichnet,**
**dass** die Abdeckplatte (4) auf die Grundplatte (2) aufschraubbar, verschweißt, aufklippbar oder aufsteckbar ausgeführt ist und der Schieber (3) zwischen diesen, gegen die Federkraft gelagert ist.

6. Tasche und oder Behältnis mit einem Fixier- und/oder Arretierungssystem nach vorgenannten Ansprüchen,
**dadurch gekennzeichnet,**
**dass** an einer Tasche (14) oder einem Behältnis zwei oben angeordnete Fixier- und/oder Arretierungselemente angeordnet sind.

7. Tasche und oder Behältnis mit einem Fixier- und/oder Arretierungssystem nach vorgenannten Ansprüchen,
**dadurch gekennzeichnet,**
**dass** an der Tasche oder dem Behältnis zwei oben angeordnete Fixier- und/oder Arretierungselemente sowie ein unteres Führungselement (15) angeordnet sind.

8. Tasche und oder Behältnis mit einem Fixier- und/oder Arretierungssystem nach Anspruch 7,
**dadurch gekennzeichnet,**
**dass** die Tasche (14) durch Einführen ihres unteren Führungselementes in ein Mittel (16) des unteren Befestigungselements an einem Träger und seitliches Einschwenken der beiden oberen Fixier- und/oder Arretierungselemente (1) in obere Befestigungselement an dem Träger fixierbar ist.

9. Tasche und oder Behältnis mit einem Fixier- und/oder Arretierungssystem nach Anspruch 7,
**dadurch gekennzeichnet,**
**dass** die Tasche durch einfaches Anheben oder seitliches Auslösen und/oder Ausschwenken der Tasche, gegen die Federkraft des federbelasteten Schiebers von den beiden oberen Fixier- und/oder Arretierungselementen lösbar ist.

## Claims

1. Fixing and/or locking system for containers on a fastening device, in particular on a carrier such as a luggage carrier in which at least one fastening element is applied on the carrier and in which one receiving element, which is applied a container and/or is connected thereto, engages and can be detachable locked to, wherein the receiving element (1) comprises a base plate (2) with a spring-loaded pusher (3) extending between said plate and a cover plate (4), **characterised in that**
the cover plate has an upper elevation (11) and a lower elevation (12) and the upper elevation has an undercut, and wherein the cover plate has an aperture (12) from one side of the cover plate (4) to the other,
wherein disposed behind the lower elevation (10) is the area for the spring-loaded pusher (3),
and disposed behind the upper elevation (11) the space with its undercut for engagement of the projection or collar of a fastening element, wherein the spring-loaded (3) fastening element which can be pushed into the aperture (12) presses into and fixes in a recess (9) in the upper elevation (11) of the cover plate.

2. Fixing and/or locking system according to claim 1 **characterised in that** the aperture (12) is arranged between the two elevations (10, 11) and that into this aperture (12) a
mushroom-shaped fastening element can be introduced and can follow a curved edge of the upper section (11) in a recess (9).

3. Fixing and/or locking system according to claim 1 **characterised in that** the
pusher (3) is flat at its upper edge (13) facing the recess (9) of the upper elevation (11) of the cover plate (4).

4. Fixing and/or locking system according to claim 1 **characterised in that** the base plate (2) and/or the cover plate (4) is/are designed with engaging elements (5) for springs (7) as well as stop and/or guide elements (6) for the pusher (3).

5. Fixing and/or locking system according to claim 1 **characterised in that** the cover plate (4) can be screwed, welded, clipped or mounted onto the base plate (2) and the pusher (3) is held between these against the spring force.

6. Bag or container with a fixing and/or locking system according to the preceding claims
**characterised in that**
on a bag (14) or a containers two fixing and/or locking elements are arranged the top.

7. Bag or container with a fixing and/or locking system according to the preceding claims **characterised in that** on a bag or the container two fixing and/or locking elements are arranged on the top as well as a lower guide element (15).

8. Bag or container with a fixing and/or locking device according to claim 7
**characterised in that**
the bag (14) can be fixed to the carrier through introducing its lower guide element into a means (16) of the lower fastening element on a carrier and lateral swivelling in of the two upper fixing and/or locking elements (1) into upper fastening elements.

9. Bag or container with a fixing and/or locking system according to claim 7
**characterised in that**
the bag can be detached from the two upper fixing and/or locking elements through simple lifting or lateral loosening and/or swivelling out of the bag, against the spring force of the spring-loaded pusher.

## Revendications

1. Système de fixation et/ou de blocage de contenants sur un dispositif de fixation, notamment sur un support, tel qu'un porte-bagages sur lequel au moins un élément de fixation est monté sur le support ou sur une pièce accessoire pour le support et s'engage dans au moins un élément de logement, lequel est monté sur un contenant et/ou est assemblé avec celui-ci et est bloqué de manière amovible avec celui-ci, l'élément de logement (1) comportant une plaque d'embase (2) avec un coulisseau (3) soumis à ressort, fonctionnant entre celle-ci et une plaque de couverture (4), la plaque de couverture comportant une élévation supérieure (11) et une élévation inférieure (12) et l'élévation supérieure comportant une contre-dépouille, et la plaque de couverture disposant d'un ajour (12) d'un côté de la plaque de couverture (4) vers l'autre, derrière l'élévation inférieure (10) étant conçue la région pour le coulisseau (3) soumis à ressort et l'espace derrière l'élévation supérieure (11) étant conçu par sa contre-dépouille pour l'engagement du débordement ou d'un collet d'un élément de fixation, le coulisseau (3) soumis à ressort poussant et fixant l'élément de fixation emboîtable dans l'ajour (12) dans une entaille (9) dans la plaque de couverture supérieure (11).

2. Système de fixation et/ou de blocage selon la revendication 1, **caractérisé en ce que** l'ajour (12) est placé entre les deux élévations (10, 11) et **en ce qu'**un élément de fixation en forme de champignon est insérable dans ledit ajour (12) et est susceptible de suivre une arête en forme de courbe de la région supérieure (11) dans une entaille (9).

3. Système de fixation et/ou de blocage selon la revendication 1, **caractérisé en ce que** sur son arête supérieure (13) qui fait face à l'entaille (9) de l'élévation supérieure (11) de la plaque de couverture (4), le coulisseau (3) est réalisé de forme plate.

4. Système de fixation et/ou de blocage selon la revendication 1, **caractérisé en ce que** la plaque d'embase (2) et/ou la plaque de couverture (4) est réalisée avec des éléments d'attaque (5) pour des ressorts (7) ainsi qu'avec des éléments d'arrêt et/ou de blocage (6) pour le coulisseau (3).

5. Système de fixation et/ou de blocage selon la revendication 1, **caractérisé en ce que** la plaque de couverture (4) est réalisée de sorte à pouvoir se visser, se souder, se clipser ou s'emboîter sur la plaque d'embase (2) et **en ce qu'**entre ces dernières, le coulisseau (3) est logé à l'encontre de la force du ressort.

6. Poche et/ou contenant pourvu d'un système de fixation et/ou de blocage selon les revendications précédentes, caractérisé(e) en ce que sur une poche (14) ou sur un contenant sont placés deux éléments de fixation et/ou de blocage placés dans le haut.

7. Poche et/ou contenant pourvu d'un système de fixation et/ou de blocage selon les revendications précédentes, **caractérisé en ce que** sur la poche ou sur le contenant sont placés deux éléments de fixation et/ou de blocage placés dans le haut, ainsi qu'un élément de guidage (15) inférieur.

8. Poche et/ou contenant pourvu d'un système de fixation et/ou de blocage selon la revendication 7, **caractérisé en ce que** la poche (14) est susceptible d'être fixée sur le support par introduction de son élément de guidage inférieur dans un moyen (16) de l'élément de fixation inférieur sur un support et par pivotement latéral des deux éléments de fixation et/ou de blocage (1) supérieurs dans l'élément de supérieur.

9. Poche et/ou contenant pourvu d'un système de fixation et/ou de blocage selon la revendication 7, **caractérisé en ce que** la poche peut se désolidariser des deux éléments de fixation et/ou de blocage supérieurs par simple soulèvement ou déclenchement et/ou pivotement latéral de la poche contre la force de ressort du coulisseau soumis à ressort.
